# EUROPEAN PATENT SPECIFICATION

(11) **EP 1 491 508 B1**
(45) Date of publication and mention of the grant of the patent: **09.08.2006**
(21) Application number: 03425352.6
(22) Date of filing: 04.06.2003
(51) Int. Cl.: C03B 9/38

(54) **Machine for producing hollow glass with a system for conveying mould cooling air**
Hohlglasformmaschine mit einer Zuführanlage der Kühlluft zu den Formen
Machine de fabrication de verre creux avec système de transport de l'air de refroidissement des moules

(43) Date of publication of application: 29.12.2004
(73) Proprietor: BDF HOLDING S.p.A., 36100 Vicenza (IT)
(72) Inventor: Sasso, Daniele, 36100 Vicenza (IT); Dalla Fontana, Oscar, 36057 Arcugnano (VI) (IT)
(74) Representative: Gallarotti, Franco

(56) References cited:
- EP-A- 0 102 820
- US-A- 3 416 908
- US-A- 4 528 015

## Description

The present invention refers to an I.S. forming machine for hollow glass, equipped with a system for supplying and conveying cooling air for parison moulds and blow moulds.

Machines as those referred to above comprise a structure including a basement on which various manufacturing sections are installed, which are independently supplied with gobs of melted glass and work independently though synchronously so as to obtain the finished product; said sections, usually two to twelve, comprise each a box-shaped module having a respective upper plate, having one or more parison moulds and one or more blow moulds, beyond further manufacturing devices and mechanisms.

It is common practice to cool parison and blow moulds with ventilated air at pressures of 650 mm H₂O to 1,800 mm H₂O depending on the mould cooling system used (radial cooling, axial cooling, verti-flow™, etc.), on the manufacturing process, on the weight of the manufactured item, on the manufacturing speed of the machine.

A first known solution envisages to supply each section with ventilated air by means of a corresponding direct duct going through the basement. By means of said duct ventilated air gets directly into the section module acting as tank or plenum chamber; by means of temporized valves mounted onto the upper plate of said module air is then supplied and conveyed from the section module to the various parison and blow moulds.

A second known solution differs from the previous one in that air for cooling blow moulds goes from the section module acting as tank or plenum chamber into a moving blow bottom plate mechanism, so as to be supplied and conveyed by the latter to the blow moulds (see document EP-A0 102 820). In said solution the module has an opening in one of its lateral walls for letting air into the aforesaid bottom plate mechanism, which operates outside the section module.

The two cooling systems described above are the most frequently used in I.S. machines, both for manufacturing special items and for standard manufacturing of high-productivity bottles; conversely, there are many techniques for cooling moulds depending on the air temporization device (plate valves, butterfly valves, egg-shaped valves, etc.), on the type of air intake duct (radial, axial unidirectional, axial bidirectional, etc.). The technique related to mould cooling systems in I.S. machines is disclosed for instance, beyond in EP-A-0 102 820 as mentioned above, also in US-A-4,909,823, DE-A-41 18 862, US-A-4,701,203, US-A-4,388,099, DE-A-30 40 356.

Following the approach of the two known solutions mentioned above, ventilated air is supplied to all sections, and thus to all moulds, by a single fan for each machine, with pressure control systems that can be of the type with choking valve on the sucking mouth of the fan or with speed control on fan motor through inverter. The control of these devices can be in its turn manual or automatic, by means of a temperature-humidity-pressure sensor mounted onto the intake of the fan with closed feedback on a PLC control system.

The present invention is based on the acknowledgement that air flow control in terms of pressures and flow rate, on the single parison and blow moulds and between the various sections of the same I.S. machine, is scarcely efficient. As a matter of fact, various tests have shown that air flow measured on different blow moulds varies widely, and large variations of air flow on the parison and blow side of the same section and of different sections have been detected.

The main aim of the present invention is to solve the aforesaid drawback.

These and other aims are achieved according to the invention by equipping the I.S. machine with a supply system that can manage independently the air flow for cooling parison and blow moulds, with independent supply and conveyor devices. In the preferred embodiment of the invention said devices comprise two separate fans for supplying the various sections of the machine (and in particular one for generating an air flow for cooling parison moulds and the other one for generating an air flow for cooling blow moulds), with independent pressure and flow rate control devices for each section and mould and with independent supply ducts and chambers.

The specific features of the I.S. machine according to the invention are listed in the appended claims, which are meant to be an integral part of the present description.

The invention will now be described in the following referring to the accompanying drawings, which disclose a non-limiting embodiment, in which:
- Figure 1 shows schematically the typical structure of an I.S. machine with eight section modules, with two known systems for supplying mould cooling air being represented;
- Figure 2 shows a portion of an I.S. machine carried out according to the present invention;
- Figure 3 shows a portion of an I.S. machine carried out according to a possible variant of the invention.

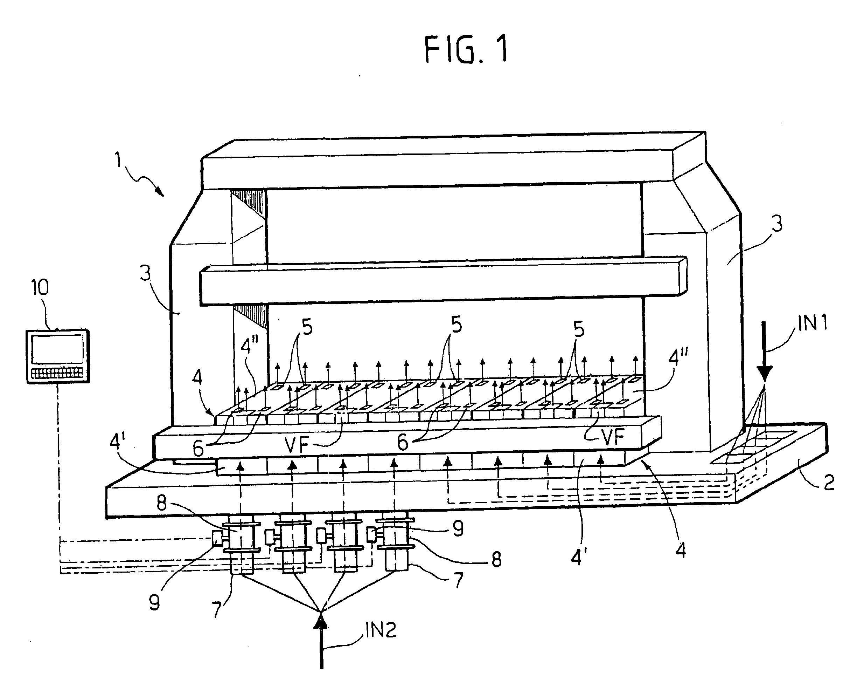

In Figure 1 the numeral 1 globally refers to an I.S. machine having a stationary structure comprising a basement 2 and uprights 3; in the case shown in the example the basement 2 supports eight operating sections 4, each comprising a corresponding box-shaped module 4', on whose upper plate 4" known manufacturing mechanisms and devices, not shown, are supported, and in which openings 5 and 6 are defined, respectively for parison moulds and blow moulds, not shown either.

Figure 1 shows schematically two systems for supplying mould cooling air known at present for I.S. machines.

On the right side of Figure 1 the arrow IN1 refers to a supply air flow of the sections 4, generated by a fan not shown. The flow IN1 is divided into partial flows, by means of corresponding ducts not shown, which get through the basement 2; from each duct the partial flow gets into a corresponding module 4' of each section 4, which acts as tank or plenum chamber, and gets out from the upper plate of said module through the openings 5 and 6.

Conversely, on the left side of Figure 1 IN2 refers to a supply air flow of the sections 4 generated under the basement 2 by means of a fan not shown; here again the flow IN2 is divided into partial flows, by means of independent ducts 7 for each section, checked by valves 8 controlled by corresponding electric or pneumatic actuators 9. Each duct 7 gets vertically through the basement 2 and ends into the module 4' of a corresponding section 4, which acts as tank or plenum chamber for cooling air; the latter then gets out from the upper plate 4" of the module 4' through the openings 5 and 6. If blow cooling is a verti-flow™ cooling, air gets out through the blow bottom plate mechanism, referred to with VF, after getting through the plenum chamber present in the module 4'. The control of valves 8 for adjusting flow rate and pressure of cooling air, can be manual by remote control on machine, or by means of a PLC 10.

As can be inferred, in both known systems shown, each module 4' is supplied with only one pressure of ventilated air, used for cooling both parison and blow moulds.

Actually, cooling requirements would be different for a parison mould and for a blow mould. Indeed, for a parison mould it is important that cooling is uniform on the whole circumference of the parison and that cooling conditions are as similar as possible for the two or more cavities, so as to obtain a better distribution of glass (constant thicknesses of walls of finished item). For a blow mould, since the item has been moulded by blowing and glass distribution has already been defined in the parison mould, cooling is only meant to remove heat from glass as fast as possible, so as to take the item from the mould without deformations (tensions induced in glass by cooling and by mechanical deformations are then eliminated by thermal stress relieving in suitable furnaces, known as annealing furnaces, where the item is heated and then slowly cooled) .

At the state of the art, however, the air flow IN1, IN2 is generated anyway with higher pressure also for moulds which might operate at lower pressures (i.e. blow moulds), and cooling time is reduced by the temporization devices present on the plate 4" of the modules 4' of the machine 1.

Said circumstance, beyond problems concerning a non-uniform air supply as mentioned in the introduction to the present description, causes high energy consumptions and loud noises, since the fan generating the flow IN1, IN2 should supply a higher air pressure than the one actually required by the manufacturing cycle.

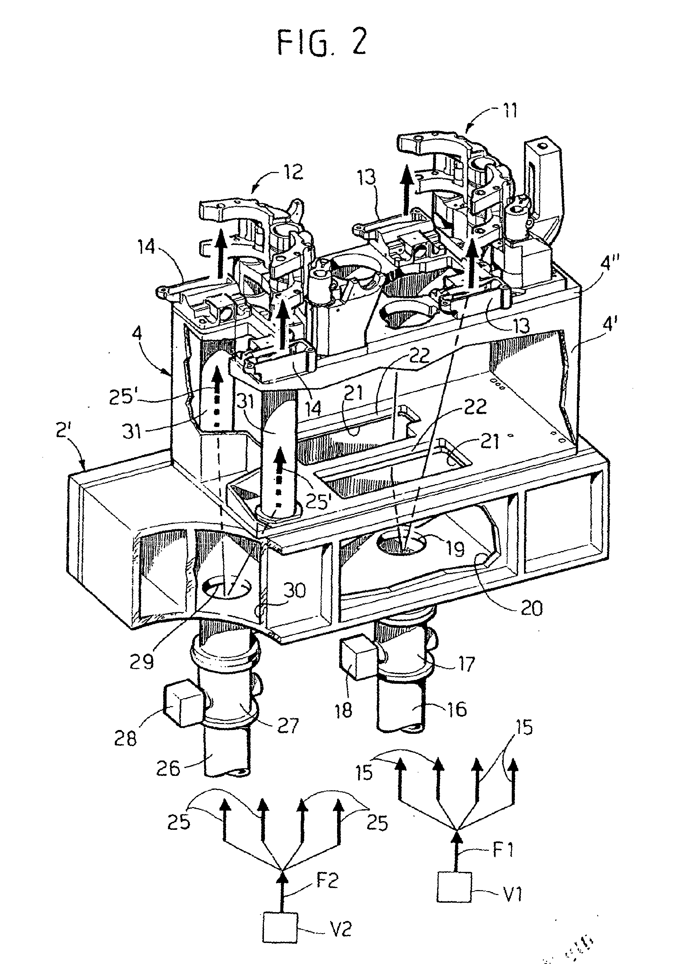

Figure 2 shows a portion of an I.S. machine equipped with a system for supplying cooling air according to the invention. The global structure of the machine according to the invention is similar to the one of the machine in Figure 1, and thus comprises a bed supporting a plurality of operating sections.

In said figure the numeral 2' refers to a portion of the aforesaid basement of the machine according to the invention, onto which is fastened a respective module 4' being part of an operating section 4; supporting brackets carrying parison and blow moulds are installed on the upper plate 4" of the module 4' and referred to with 11 and 12 respectively, together with the devices for supplying air to the two types of moulds, referred to with 13 and 14 respectively, for instance with manual adjustment or adjustment with temporized valve controlled by the machine control unit; the drawing does not show the other section mechanisms, known per se, for reasons of further clarity.

The machine as in Figure 2 is equipped with a system for supplying cooling air with independent flows for each section 4, and in particular a non-canalized air flow for cooling parison moulds and an air flow canalized within the module 4' for cooling blow moulds.

In said solution a first fan V1 generates a corresponding air flow F1 at a first pressure, regarded as optimal for supplying cooling systems for parison moulds. The flow F1 is divided into partial flows 15 by means of respective ducts, one of which is referred to with 16.

Each flow 15 is supplied to the basement 2' through a valve 17. The control of air flow rate and air pressure is carried out by means of an actuator 18, controlled manually or via PLC.

The flow 15 getting out of the valve 17 supplies by means of a passage 19 in the lower wall of the basement 2' a first plenum chamber 20 obtained within said basement. One or more openings 21, facing corresponding openings 22 present in the lower wall of the module 4', are arranged in the upper wall of the chamber 20, so that air can get into said module, which also acts as plenum chamber.

Air thus collected within the module 4' can thus reach the system for cooling parison moulds, known per se and not shown, through the supply or temporization devices 13 mounted onto the upper plate 4", on the corresponding passages of the latter (identical to those referred to with 5 in Figure 1).

It should be noted that the valve 17 also traps completely the flow rate of the air flow 15 in case of maintenance operations on the mechanisms installed in the module 4', or in case of mould replacement.

A second fan V2 generates a corresponding air flow F2 at a second pressure, lower than the pressure of the flow F1, regarded as optimal for supplying cooling systems for blow moulds. Also the flow F2 is divided into partial flows 25 by means of respective ducts, one of which is referred to with 26.

The flow 25 is supplied to the basement 2 through a valve 27, and the control of its flow rate and pressure is carried out by means of an actuator 28 controlled manually or via PLC.

The flow 25 getting out of the valve 27 supplies by means of a passage 29 a second plenum chamber 30 defined within the basement portion 2'; one or more openings, facing corresponding openings present in the lower wall of the module 4', are arranged in the upper wall of the chamber 30, onto which openings the first ends of respective canalizations 31 are fastened; conversely, the second end of each canalization 31 is connected directly to a corresponding supply or temporization device 14 for cooling air for blow moulds, mounted onto the upper plate 4" of the module 4, on the corresponding passages of said plate (identical to those referred to with 6 in Figure 1).

The flow 25 getting out of the chamber 30 is thus divided into two partial canalized flows 25' for cooling blow moulds. Here again the valve 27 additionally traps completely the flow rate of flow 25 in case of maintenance operations on the mechanisms installed in the module 4', or in case of mould replacement.

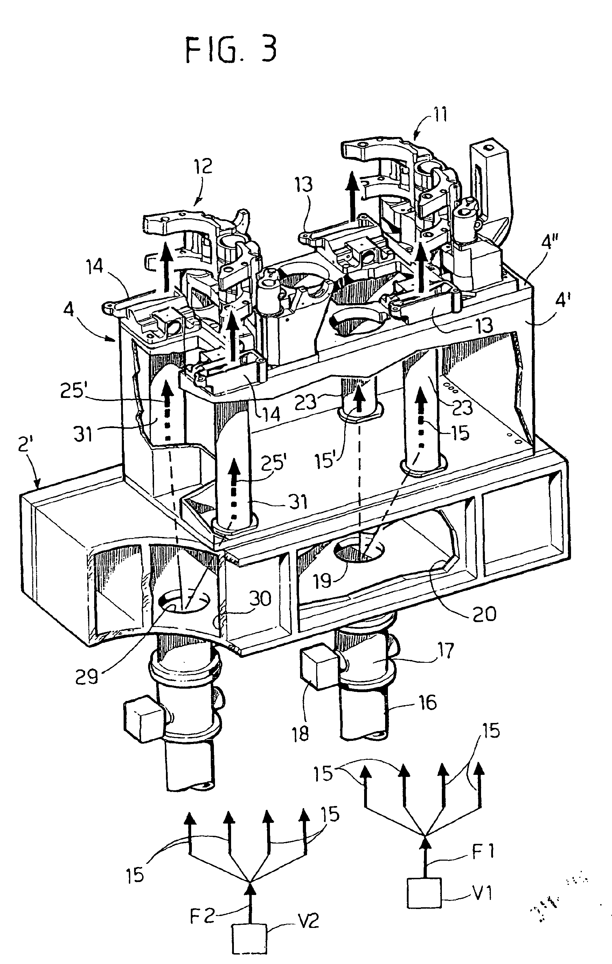

Figure 3 shows a portion of an I.S. machine equipped with a system for supplying cooling air carried out according to a possible variant of the invention, with independent air flows both for parison moulds and for blow moulds, both canalized within the module 4'. In said figure the same reference numbers as in Figure 2 are used to refer to elements that are identical or equivalent to those already shown.

Also in this variant the air flow 15 for cooling blank moulds is supplied through the basement portion 2' by means of the valve 17, whose flow rate and pressure are controlled by the actuator 18.

One or more openings, facing corresponding openings present in the lower wall of the module 4', are defined in the upper wall of the chamber 20, onto which openings the first ends of respective canalizations 23 are fastened; conversely, the second end of each canalization 23 is connected directly to a corresponding supply or temporization device 13 for cooling air for parison moulds, mounted onto the upper plate 4" of the module 4, on the corresponding passages of said plate (identical to those referred to with 5 in Figure 1). As can be inferred, therefore, the flow 15 getting out of the chamber 20 is thus divided into two partial canalized flows 15' for cooling parison moulds.

The system for supplying and conveying cooling air for blow moulds is identical to the one described above with reference to Figure 2.

Practical tests have allowed to find out that the system for supplying and conveying air as described in the embodiments shown in Figures 2 and 3 allows to achieve the aims of the invention, and in particular to:
- solve manufacturing problems related to a non-uniform air distribution between parison and blow moulds, and between the various sections of the I.S. machine;
- operate with different pressures between parison and blow moulds, thanks to the double ventilation system with independent fans;
- achieve high energy savings, since each fan supplies what is actually required by the manufacturing cycle;
- reduce machine noise levels thanks to the possibility to operate with different pressures between parison and blow moulds, being thus not forced to supply each section module with the maximum required pressure.

## Claims

1. Machine for forming hollow glass items, in particular an I.S. machine, with a structure comprising a basement (2') supporting a plurality of operating sections (4) placed one beside the other, each section (4) comprising a module (4') supporting corresponding devices (2'-14) required for the manufacturing cycle, among which first devices (13) for supplying cooling air to parison moulds, and second devices (14) for supplying cooling air to blow moulds, the first and second supply devices (13, 14) being mounted onto the corresponding module (4'), **characterized in that** it comprises a first (V1, 16-22; V1, 16-23) and a second arrangement (V2, 26-31) for supplying air separately, which convey independently a first flow of cooling air (F1, 15; F1, 15, 15') to the first supply devices (13) of at least a plurality of modules (4'), and a second flow of cooling air (F2, 25, 25') to the second supply devices (14) of said plurality of modules (4'), both flows (F1, 15, F2, 25, 25'; F1, 15, 15', F2, 25, 25') getting independently through each module (4') of said plurality, through the basement (2') and within the module (4').

2. Machine according to claim 1, **characterized in that** the first arrangement (V1, 16-22; V1, 16-23) comprises a single fan (V1) generating the first flow (F1, 15; F1, 15, 15') at a first pressure, and the second arrangement (V2, 26-31) comprises a single fan (V2) generating the second flow (F2, 25, 25') at a second pressure which is lower than the first pressure.

3. Machine according to claim 1, **characterized in that** the second arrangement (V2, 26-31) comprises for each module (4') of said plurality canalizations (31) conveying the second flow (F2, 25, 25'), which get through the respective module (4') and are connected to the second supply devices (14) of the latter.

4. Machine according to claim 1, **characterized in that** the first arrangement (V1, 16-23) comprises for each module (4') of said plurality canalizations (23) conveying the first flow (F1, 15; F1, 15, 15'), which get through the respective module (4') and are connected to the first supply devices (13) of the latter.

5. Machine according to claim 3, **characterized in that** in the first arrangement (V1, 16-22) each module (4') of said plurality acts as air tank or plenum chamber.

6. Machine according to claim 1, **characterized in that** the second arrangement (V2, 26-31) comprises for each module (4') of said plurality a chamber (30) acting as air tank, defined within a respective basement portion (2') and supplied with the second flow (F2, 25, 25').

7. Machine according to claim 1, **characterized in that** the first arrangement (V1, 16-22) comprises for each module (4') of said plurality a chamber (20) acting as air tank, defined within a respective basement portion (2') and supplied with the first flow (F1, 15; F1, 15, 15').

8. Machine according to claim 6 or 7, **characterized in that** upstream from at least one between the chamber (20) of the first arrangement (V1, 16-22; V1, 16-23) and the chamber (30) of the second arrangement (V2, 26-31) it is provided for a respective adjustment valve (17, 27) equipped with actuator (18, 28) for adjusting air pressure and flow rate in the respective chamber (20, 30).

9. Machine according to claim 1, **characterized in that** the supply devices (12, 13) are adjusted manually or by a temporized valve controlled by a machine control unit.

10. Machine according to claim 1, **characterized in that** the supply devices (12, 13) are mounted onto an upper plate (4") of the respective module (4').

## Patentansprüche

1. Maschine zum Formen von hohlen Glasgegenständen, speziell eine I.S.-Maschine, mit einer Strulctur, welche einen Sockel (2') aufweist, der eine Vielzahl von Betriebsabschnitten (4) stützt, welche einer neben dem anderen platziert sind, wobei jeder Abschnitt (4) ein Modul (4') aufweist, das entsprechende Vorrichtungen (2'-14) stützt, die für einen Herstellungszyklus benötigt werden, unter denen es erste Vorrichtungen (13) gibt, zur Zufuhr von Kühlluft zu Extrudatgießformen, und zweite Vorrichtungen zur Zufuhr von Kühlluft zu Blasgießformen, wobei die ersten und zweiten Zuführvorrichtungen (13, 14) auf dem entsprechenden Modul (4') montiert sind, **gekennzeichnet dadurch, dass** sie aufweist eine erste (V1, 16-22; V1, 16-23) und zweite Anordnungen (V2, 26-31) zur separaten Zufuhr von Luft, welche unabhängig einen ersten Strom von Kühlluft (F1, 15; F1, 15, 15') zu den ersten Zuführvorrichtungen (13) von wenigstens einer Vielzahl von Modulen (4') transportiert, und einen zweiten Kühlluftstrom (F2, 25, 25') zu den zweiten Zuführvorrichtungen (14) der Vielzahl von Modulen (4'), wobei beide Ströme (F1, 15, F2, 25, 25'; F1, 15, 15', F2, 25, 25') unabhängig durch jedes Modul (4') der Vielzahl durch den Sockel (2') und innerhalb das Modul (4') gelangen.

2. Maschine nach Anspruch 1, **dadurch gekennzeichnet, dass** die erste Anordnung (V1, 16-22; V1, 16-23) einen einzigen Lüfter (V1) aufweist, der den ersten Strom (F1, 15; F1, 15, 15') bei einem ersten Druck erzeugt und die zweite Anordnung (V2, 26-31) einen zweiten Lüfter (V2) aufweist, der den zweiten Strom (F1, 25, 25') bei einem zweiten Druck erzeugt, der niedriger ist als der erste Druck.

3. Maschine nach Anspruch 1, **dadurch gekennzeichnet, dass** die zweite Anordnung (V2, 26-31) für jedes Modul (4') der Vielzahl Kanalisationen (31) aufweist, die den zweiten Strom (F2, 25, 25') transportieren, welche durch das jeweilige Modul (4') gelangen und mit den zweiten Zuführvorrichtungen (14) des letzteren verbunden sind.

4. Maschine nach Anspruch 1, **dadurch gekennzeichnet, dass** die erste Anordnung (V1, 16-23) für jedes Modul (4') der Vielzahl Kanalisationen (23) aufweist, die den ersten Strom (F1, 15; F1, 15, 15') transportieren, welche durch das jeweilige Modul (4') gelangen und mit den Zuführvorrichtungen (13) des letzteren verbunden sind.

5. Maschine nach Anspruch 3, **dadurch gekennzeichnet, dass** in der ersten Anordnung (V1, 16-22) jedes Modul (4') der Vielzahl als Lufttank oder Füllkammer agiert.

6. Maschine nach Anspruch 1, **dadurch gekennzeichnet, dass** die zweite Anordnung (V2, 26-31) für jedes Modul (4') der Vielzahl eine Kammer (30) aufweist, die als Lufttank arbeitet, welche innerhalb eines jeweiligen Sockelabschnitts (2') vorgegeben ist und die mit dem zweiten Strom (F2, 25, 25') versorgt wird.

7. Maschine nach Anspruch 1, **dadurch gekennzeichnet, dass** die erste Anordnung (V1, 16-22) für jedes Modul (4') der Vielzahl eine Kammer (20) aufweist, die als Lufttank arbeitet, welche innerhalb eines jeweiligen Sockelabschnitts (2') vorgegeben ist, und die mit dem ersten Strom (F1, 15; F1, 15, 15') versorgt wird.

8. Maschine nach Anspruch 6 oder 7, **dadurch gekennzeichnet, dass** stromaufwärts von wenigstens einem zwischen der Kammer (20) der ersten Anordnung (V1, 16-22; V1, 16-23) und der Kammer (30) der zweiten Anordnung (V2, 26-31) ein jeweiliges Justageventil (17, 27) vorgesehen ist, das mit einem Aktor (18, 28) ausgestattet ist, zur Justage von Luftdruck und Flussrate in der jeweiligen Kammer (20, 30).

9. Maschine nach Anspruch 1, **dadurch gekennzeichnet, dass** die Zuführvorrichtungen (12, 13) manuell oder durch ein Warteventil justiert werden, das durch eine Maschinensteuerungseinheit gesteuert wird.

10. Maschine nach Anspruch 1, **dadurch gekennzeichnet, dass** die Zuführvorrichtungen (12, 13) auf einer oberen Platte (4") des jeweiligen Moduls (4') montiert sind.

## Revendications

1. Machine de fabrication d'articles en verre creux, en particulier une machine sectionnelle, dotée d'une structure comprenant un socle (2') soutenant une pluralité de sections opérationnelles (4) placées l'une à côté de l'autre, chaque section (4) comprenant un module (4') soutenant des dispositifs correspondants (2'-14) requis pour le cycle de fabrication, parmi lesquels des premiers dispositifs (13) pour fournir de l'air de refroidissement aux moules ébaucheurs, et des seconds dispositifs (14) pour fournir de l'air de refroidissement aux moules finisseurs, les premiers et seconds dispositifs d'alimentation (13, 14) étant montés sur le module correspondant (4'), **caractérisée en ce qu'**elle comprend un premier agencement (V1, 16-22 ; V1, 16-23) et un second agencement (V2, 26-31) pour fournir de l'air séparément, qui transportent de manière indépendante un premier flux d'air de refroidissement (F1, 15 ; F1, 15, 15') jusqu'aux premiers dispositifs d'alimentation (13) d'au moins une pluralité de modules (4'), et un second flux d'air de refroidissement (F2, 25, 25') jusqu'aux seconds dispositifs d'alimentation (14) de ladite pluralité de modules (4'), les deux flux (F1, 15, F2, 25, 25' ; F1, 15, 15', F2, 25, 25') traversant de manière indépendante chaque module (4') de ladite pluralité, en passant par le socle (2') pour pénétrer à l'intérieur du module (4').

2. Machine selon la revendication 1, **caractérisée en ce que** le premier agencement (V1, 16-22 ; V1, 16-23) comprend un unique ventilateur (V1) générant le premier flux (F1, 15 ; F1, 15, 15') à une première pression, et le second agencement (V2, 26-31) comprend un unique ventilateur (V2) générant le second flux (F2, 25, 25') à une seconde pression qui est inférieure à la première pression.

3. Machine selon la revendication 1, **caractérisée en ce que** le second agencement (V2, 26-31) comprend pour chaque module (4') de ladite pluralité des canalisations (31) transportant le second flux (F2, 25, 25'), qui traversent le module respectif (4') et sont raccordées aux seconds dispositifs d'alimentation (14) de ce dernier.

4. Machine selon la revendication 1, **caractérisée en ce que** le premier agencement (V1, 16-23) comprend pour chaque module (4') de ladite pluralité des canalisations (23) transportant le premier flux (F1, 15, ; F1, 15, 15'), qui traversent le module respectif (4') et sont raccordées aux premiers dispositifs d'alimentation (13) de ce dernier.

5. Machine selon la revendication 3, **caractérisée en ce que** dans le premier agencement (V1, 16-22), chaque module (4') de ladite pluralité joue le rôle de réservoir ou de chambre de distribution d'air.

6. Machine selon la revendication 1, **caractérisée en ce que** le second agencement (V2, 26-31) comprend pour chaque module (4') de ladite pluralité une chambre (30) jouant le rôle de réservoir d'air, définie à l'intérieur d'une partie de socle respective (2') et alimentée par le second flux (F2, 25, 25').

7. Machine selon la revendication 1, **caractérisée en ce que** le premier agencement (V1, 16-22) comprend pour chaque module (4') de ladite pluralité une chambre (20) jouant le rôle de réservoir d'air, définie à l'intérieur d'une partie de socle respective (2') et alimentée par le premier flux (F1, 15 ; F1, 15, 15').

8. Machine selon la revendication 6 ou 7, **caractérisée en ce qu'**en amont d'au moins un élément parmi la chambre (20) du premier agencement (V1, 16-22 ; V1, 16-23) et la chambre (30) du second agencement (V2, 26-31) est prévue une soupape de régulation respective (17, 27) équipée d'un actionneur (18, 28) pour réguler la pression d'air et le débit dans la chambre respective (20, 30).

9. Machine selon la revendication 1, **caractérisée en ce que** les dispositifs d'alimentation (12, 13) sont réglés manuellement ou par une soupape temporisée commandée par une unité de commande de la machine.

10. Machine selon la revendication 1, **caractérisée en ce que** les dispositifs d'alimentation (12, 13) sont montés sur une plaque supérieure (4") du module respectif (4').
